Europäisches Patentamt

European Patent Office

Office européen des brevets

(19)

(11) Numéro de publication: **0 056 346**
A1

# (12) DEMANDE DE BREVET EUROPEEN

(21) Numéro de dépôt: **82400020.2**

(22) Date de dépôt: **07.01.82**

(51) Int. Cl.³: **A 21 D 13/00**, A 21 B 7/00

(30) Priorité: **08.01.81 FR 8100223**

(43) Date de publication de la demande: **21.07.82**
**Bulletin 82/29**

(84) Etats contractants désignés: **AT BE CH DE GB IT LI LU NL SE**

(71) Demandeur: **GRINGOIRE-BROSSARD Société dite:, 14 avenue de la République, F-45300 Pithiviers (FR)**

(72) Inventeur: **Lucas, André, 16 Route d'Yèvre-le-Chatel Dadonville, F-45300 Pithiviers (FR)**

(74) Mandataire: **Fruchard, Guy et al, NOVAPAT-CABINET CHEREAU 107, boulevard Péreire, F-75017 Paris (FR)**

(54) **Procédé et machine de fabrication en continu d'articles de boulangerie industrielle plats, pré-cuits, par exemple des fonds de pizzas.**

(57) Le procédé consiste à laminer la pâte pré-fermentée dans un train de laminoir (5) pour l'amener sous forme d'une bande d'épaisseur réduite (7), de l'ordre de 0,5 à 3 mm, à un dispositif de découpage à l'emporte-pièce (9) des articles (10) suivant un contour prédéterminé, les aricles découpés passant ensuite dans un tunnel de fermentation (11), un four de pré-cuisson (12) un poste de pré-emballage (14) et un tunnel de stérilisation (15). La pâte est constituée d'un mélange de farine, d'eau, de sucre, d'huile végétale, de sel et de levure fraîche pressée.

FIG. 2

EP 0 056 346 A1

1.

La présente invention concerne un procédé et une machine de fabrication d'articles de boulangerie industrielle plats pré-cuits, plus particulièrement de fonds de pizzas.

Parallèlement aux pizzas surgelées, qui sont en fait des plats complets garnis pré-préparés, le besoin s'est fait sentir, au plan commercial, de la fourniture de fonds de pizza pré-cuits conditionnés avec une préparation ou une garniture sous-sachet permettant à la ménagère de réaliser rapidement et, éventuellement à sa façon, des pizzas tout en l'affranchissant des servitudes longues et ardues de préparation de la pâte. Alors que les pizzaioli mettent en forme et dressent à la main les pizzas, juste avant l'enfournement, les nécessités de production industrielles en grande série obligent, d'une part, à conformer et préparer efficacement la pâte, et d'autre part, à la stériliser et à la conditionner. La préparation de la pâte inclut notamment une fermentation permettant à la pâte de lever sous l'effet de la levure incorporée. Il a été proposé une technique de mise en forme des fonds de pizzas par étalage à la presse ou fonçage consistant à préparer une dose de pâte sous forme de boule placée dans un moule escamotable associé à un poinçon de pressage pour réaliser la forme requise de galette plate. Outre les difficultés opérationnelles, ce procédé présente des inconvénients tenant au dosage massique de la boule pour une dimension de moule déterminée,

2.

compte tenu notamment des différents formats envisageables et des problèmes de retrait non contrôlé de la galette ainsi obtenue lors des étapes ultérieures de fermentation ou de cuisson.

La présente invention a précisément pour objet de proposer un procédé et une machine de fabrication en continu d'articles de boulangerie industrielle plats pré-cuits, tels que fonds de pizza ou galettes de maïs, permettant des cadences de production élevées dans des conditions offrant une grande souplesse d'utilisation et de modulation selon les dimensions recherchées pour le produit fini et assurant à celui-ci une homogénéité et une reproductibilité parfaite.

Pour ce faire, selon une caractéristique de la présente invention, le procédé comprend les étapes de laminer la pâte pré-fermentée dans un train de laminoir pour l'amener sous forme d'une bande d'épaisseur réduite déterminée, de découper dans cette bande les articles suivant un contour déterminé, de faire passer les articles découpés dans un tunnel de fermentation et d'au moins pré-cuire les articles fermentés.

Selon une autre caractéristique de la présente invention, la machine de fabrication d'articles plats pré-cuits, comprenant un tunnel de fermentation et un four de pré-cuisson, comporte au moins deux paires de cylindres de laminage alimentés par un dispositif de fourniture de pâte et délivrant une bande de pâte d'épaisseur réduite à un dispositif de découpage pour découper les articles suivant un contour déterminé dans la bande de pâte, ainsi que des moyens pour acheminer les articles découpés vers le tunnel de fermentation.

Ce procédé et cette machine à fonctionnement en continu permettent une grande souplesse d'utilisation selon les épaisseurs et dimensions requises pour les articles finis, un excellent contrôle de qualité en corrigeant très facilement, au niveau des poinçons de l'emporte-pièce de découpage, le contour de découpe des articles pour tenir compte du retrait de ceux-ci pour l'obtention d'articles pré-cuits et stérili-

3.

sés de dimensions homogènes, stables et parfaitement reproductibles.

D'autres caractéristiques et avantages de la présente invention ressortiront de la description suivante d'un
mode de réalisation, donné à titre illustratif mais nullement limitatif, faite en relation avec les dessins annexés,
sur lesquels :

La figure 1 représente schématiquement une chaîne
de fabrication de fonds de pizzas pré-emballés et stérilisés;
et

La figure 2 représente schématiquement les séquences de découpage des fonds de pizza à la sortie du train
de laminoir .

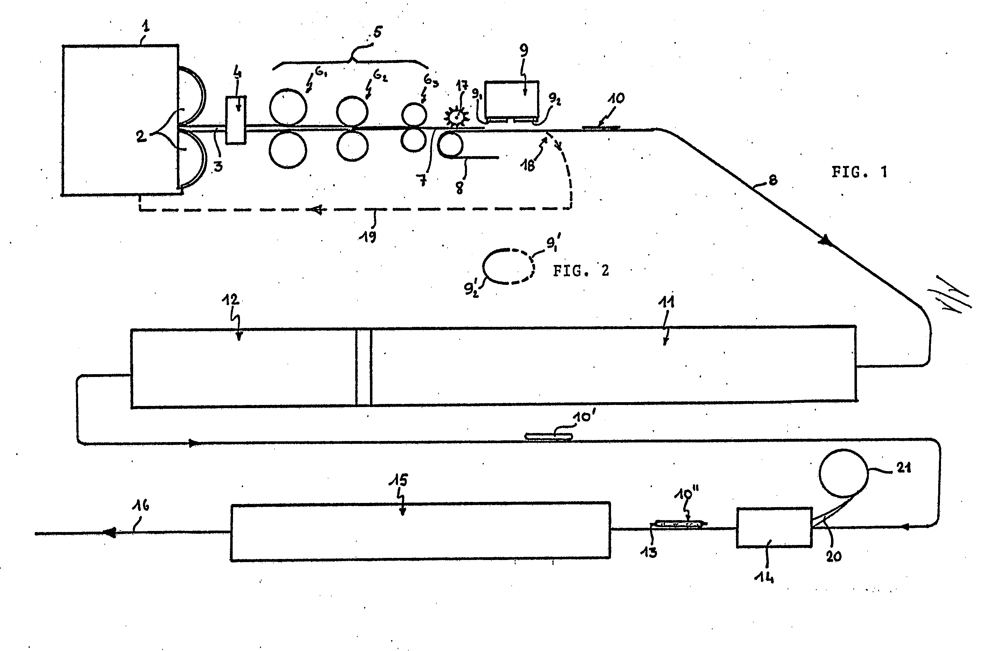

Dans la chaîne représentée sur la figure 1, la pâte à pizza, malaxée et reposée pour subir une pré-fermentation, est chargée dans un dispositif de fourniture de pâte
1 comprenant deux cylindres cannelés 2, délivrant une feuille
de pâte épaisse 3, de l'ordre de 25 mm, transitant par un
dispositif de farinage 4 pour passer au travers d'un train de
laminoir 5 comportant avantageusement trois paires de cylindres $6_1$, $6_2$, $6_3$ pour délivrer en sortie, en continu, la pâte
sous la forme d'une fine bande 7 à un convoyeur 8 l'amenant à
passer tout d'abord en un poste de découpage 9,découpant les
fonds de pizza à l'emporte-pièce dans la bande 7, pour constituer les fonds individuels 10 qui sont amenés à passer ensuite, successivement, dans un tunnel de fermentation 11, un
four de cuisson 12, d'où sortent les fonds de pizza 10', gonflés par le complément de fermentation et pré-cuits, qui sont
ultérieurement emballés et scellés dans un sachet en un film de
matériau plastique thermosoudable 13 en un poste de pré-emballage 14 pour passer dans un tunnel de stérilisation 15 et subir ensuite, le long de la fin du trajet 16 du convoyeur, un
refroidissement progressif à l'air libre avant leur conditionnement final,avec la garniture d'accompagnement, dans des emballages carton.

Les cylindres du train de laminoirs 5 sont réglés
pour fournir une bande de pâte 7, d'une épaisseur comprise

4.

entre 0,5 mm et 3 mm, selon l'épaisseur finale requise pour le fond fermenté et pré-cuit 10' (typiquement de l'ordre de 7 à 11 mm), la bande de pâte 7 étant avantageusement percée par un rouleau à dents 17 avant d'atteindre le poste de découpage 9. Les rognures de pâte, après découpage, sont avantageusement déviées en 18 pour être réacheminées suivant le trajet 19 et être réintégrées à la masse de pâte de départ dans le dispositif de fourniture de pâte 1.

Comme on le voit sur la figure 2, le découpage des fonds de pâte 10 dans la bande 7 présente une configuration généralement ovoïde pour tenir compte du retrait ultérieur de la pâte légèrement étirée lors de son passage dans le train de laminoir 5, de façon que le fond final pré-emballé, présente le contour circulaire au diamètre nominal recherché. La découpe du fond 10 s'effectue avantageusement en deux étapes par deux poinçons $9_1$ et $9_2$ à mouvement alternatif ou rotatif, dont on retrouve les traces de découpe $9_1'$ et $9_2'$ sur la figure 2. Le temps de transit des fonds découpés 10 dans le tunnel de fermentation 11, du type à injection de vapeur d'eau pour obtenir une humidité de 80 à 95 % de saturation à une température entre 35 et 50°C, est choisi de l'ordre de 15 à 25 minutes, le temps de cuisson dans le four 12 étant de l'ordre de 7 à 12 minutes, typiquement de 8 à 9 minutes pour une température de l'ordre de 90 à 150°C.

Au niveau du poste de pré-emballage 14, les fonds fermentés et pré-cuits 10' sont insérés dans un sachet tubulaire scellé sur trois côtés formés en continu à partir d'un film 20 de matériau thermosoudable, dévidé à partir d'une bobine 21 et constitué avantageusement en un complexe polyester-polypropylène laissant passer les infrarouges pour la phase ultérieure de stérilisation dans le tunnel de stérilisation à infrarouges 15. Celui-ci comporte des lampes disposées de part et d'autre du convoyeur supportant les fonds pré-emballés 10" et fournissant une température (mesurée au pyromètre) de l'ordre de 130 à 150°C. Le temps de séjour des articles dans le tunnel 15 est compris entre 3 et 4 minutes environ. La durée de la phase de refroidissement à l'air sur la

5.

partie finale 16 du convoyeur n'est pas critique, mais est généralement supérieure à 4 minutes, comprise généralement entre 4 et 10 minutes. Au niveau du poste de pré-emballage 14, la majeure partie de l'air contenu dans le sachet tubulaire est expulsée avant scellage étanche de l'étui de pré-emballage 13, par exemple par un patin élastique, suivant le procédé décrit dans la demande de brevet français n° au nom de la demanderesse, dont le contenu est supposé intégré ici pour référence.

La pâte servant à la réalisation des fonds de pizza est constituée typiquement d'un mélange de farine de blé, d'eau, de levure fraîche pressée, de sel, de sucre, par exemple du dextrose monohydraté, favorisant la fermentation de la pâte et la conservation de celle-ci après cuisson, et d'une huile végétale, par exemple de tournesol, conférant un caractère croustillant au produit final.

Quoique la présente invention ait été décrite en relation avec un mode de réalisation particulier, elle ne s'en trouve pas limitée mais est au contraire susceptible de modifications et de variantes qui apparaîtront à l'homme de l'art.

6.

REVENDICATIONS

1 - Procédé de fabrication en continu d'articles de boulangerie industrielle plats, pré-cuits, caractérisé en ce qu'il comprend les étapes de laminer la pâte pré-fermentée dans un train de laminoir pour l'amener sous une forme d'une bande d'épaisseur réduite déterminée, de découper dans la bande des articles suivant un contour déterminé, de faire passer les articles découpés dans un tunnel de fermentation et d'au moins pré-cuire les articles découpés ainsi fermentés.

2 - Procédé selon la revendication 1, caractérisé en ce qu'il comporte les étapes ultérieures de stérilisation puis de refroidissement des articles.

3 - Procédé selon la revendication 2, caractérisé en ce qu'il comprend, entre les étapes de pré-cuisson et de stérilisation, l'étape de placer chaque article dans un sachet de film scellé.

4 - Procédé selon la revendication 3, caractérisé en ce que l'article est scellé dans l'étui après que la majeure partie de l'air contenu dans le sachet a été expulsée.

5 - Procédé selon l'une quelconque des revendications précédentes , caractérisé en ce que la fermentation des articles s'effectue pendant une durée de 15 à 25 minutes dans un tunnel de fermentation à injection à vapeur à une température de l'ordre de 35 à 50°C.

6 - Procédé selon l'une quelconque des revendications précédentes, caractérisé en ce que la pré-cuisson des articles s'effectue à une température de l'ordre de 90 à 150°C pendant une durée de l'ordre de 7 à 12 minutes.

7 - Procédé selon l'une quelconque des revendications précédentes, caractérisé en ce que, à la sortie du train de laminoir, l'épaisseur du film de pâte est comprise entre 0,5 et 3 mm.

8 - Procédé selon l'une quelconque des revendications précédentes, caractérisé en ce que la pâte est constituée d'un mélange de farine, d'eau, de levure fraîche pressée, de sel, de sucre et d'huile végétale.

7.

9 - Machine pour la fabrication en continu d'articles de boulangerie industrielle plats pré-cuits, comprenant, en série, un tunnel de fermentation et un four de pré-cuisson, caractérisée en ce qu'elle comprend un dispositif de fourniture de pâte malaxée pré-fermentée (1), un train de laminoir (5) délivrant une bande de pâte d'épaisseur réduite (7) à un dispositif de découpage des articles (9) suivant un contour déterminé, et des moyens (8) pour acheminer les articles découpés vers le tunnel de fermentation (11).

10 - Machine selon la revendication 9, caractérisée en ce qu'elle comprend, successivement, en aval du four de pré-cuisson (12), un dispositif de mise sous film et de scellage (14) des articles pré-cuits et un four de stérilisation (15).

11 - Machine selon la revendication 10, caractérisée en ce que le dispositif de mise sous film de pré-emballage (14) comprend des moyens pour expulser la majeure partie de l'air contenu dans le sachet formé par le film de pré-emballage avant son scellage étanche.

12 - Machine selon l'une quelconque des revendications 9 à 11, caractérisée en ce que le dispositif de fourniture de pâte (1) comprend deux cylindres cannelés (2) délivrant la pâte au train de laminoir (5) sous la forme d'une bande épaisse (3).

13 - Machine selon l'une quelconque des revendications 9 à 12, caractérisée en ce qu'elle comprend un dispositif de recyclage (18, 19) des rognures de la bande de pâte découpée vers le dispositif de fourniture (1).

FIG. 1

FIG. 2

0056346

**Office européen des brevets**

**RAPPORT DE RECHERCHE EUROPEENNE**

Numéro de la demande

EP 82 40 0020

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | US - A - 4 046 920 (R.V. MOLINE) | | A 21 D 13/00 |
| Y | * Revendication 1; figures 1, 2,8; colonne 4, lignes 24-61; colonne 5, lignes 11-26; colonne 6, ligne 57 - colonne 7, ligne 7 * | 1-4,5-11,13 | A 21 B 7/00 |
| | -- | | |
| Y | FR - A - 2 406 392 (JOVLIN G.) | 1-4,9-11 | |
| | * Revendications 1,3; page 1, ligne 28 - page 2, ligne 4 * | | |
| | -- | | **DOMAINES TECHNIQUES RECHERCHES (Int. Cl. 3)** |
| A | US - A - 4 120 984 (D.G. RICHARD-SON) | | |
| | ---- | | A 21 D<br>A 21 B |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-03-1982 | COUCKE |

OEB Form 1503.1 06.78